Europäisches Patentamt

(19) European Patent Office

Office européen des brevets

(11) Publication number: **0 107 017**
**B1**

(12) **EUROPEAN PATENT SPECIFICATION**

(45) Date of publication of patent specification: **28.12.88**

(21) Application number: **83109119.4**

(22) Date of filing: **15.09.83**

(51) Int. Cl.⁴: **H 04 B 9/00, H 04 B 1/74**

(54) **Fiber optic data transmission system.**

(30) Priority: **22.10.82 US 436166**

(43) Date of publication of application:
**02.05.84 Bulletin 84/18**

(45) Publication of the grant of the patent:
**28.12.88 Bulletin 88/52**

(84) Designated Contracting States:
**DE FR GB IT**

(56) References cited:
**GB-A-2 028 062**

**PATENTS ABSTRACTS OF JAPAN, vol. 7, no.
111 (E-175)1256r, 14th May 1983; & JP-A-58 30
247 (MATSUSHITA DENKI SANGYO K.K.) 22-
02-1983**

(73) Proprietor: **International Business Machines
Corporation
Old Orchard Road
Armonk, N.Y. 10504 (US)**

(72) Inventor: **Balliet, Layton
1134 S.W. 19th Street
Boca Raton Florida 33432 (US)**
Inventor: **Wantshouse, Richard Allen
501 N.E. 14th Street
Boca Raton Florida 33432 (US)**
Inventor: **Wylie, Thomas James
7200 N.W. 2nd Avenue
Boca Raton Florida 33432 (US)**

(74) Representative: **Bravi, Alfredo
IBM Italia S.p.A. Direzione Brevetti P.O.Box 137
I-20090 Segrate (Milano) (IT)**

Courier Press, Leamington Spa, England.

## Description

The invention relates to a fiber optic data transmission system for electronically switching optical data between stations connected in a loop or series configuration.

Transmission of digital data in the optical mode by fiber optic lines is being used increasingly in industry because of many advantages, including less driving power and less transmission noise than electrical transmission. However, along with the advantages of transmitting data in the optical mode compared to the electrical mode, the disadvantage has been that optical switching of data requires use of large and costly optical apparatuses with inherent loss of speed in transmission.

Known prior art, e.g. the system described in U.S. patent 4.166.946, which transmits optical data with other than optical switching, presents synchronization problems. Other prior art of interest are U.S. patents 3.870.396 and 3.870.398 which describe optical coupler devices, U.S. patent 4.017.149 which describes a fiber optical bus communication system, and U.S. patent 3.652.867 which is representative of non-optical bypass systems.

The present invention overcomes the disadvantages of the optical data switching of the systems known in the prior art by performing the data switching by electronic logic devices while allowing the optical data to move in a non-switching mode. Also the synchronization problems of the prior art are overcome, since the present invention eliminates any need for recombining or alignment of optical data.

The present invention transmits optical data between stations in a continuous mode without optical switching, and performs a bypass of a selected station by switching from a first optical data path to a second optical data path by electronic logic switching devices. An optical T-coupler device at each station on a loop or series of stations splits an incoming optical signal from the preceding station into two paths, with part of the signal entering the station attached to the T-coupler and the remaining part being transmitted to the following station. Through electronic digital logic in each station a decision is made to select data from either of the two optical data paths for entry into the station. Through this capability an effective bypassing of a station can be performed without optical switching of the optical signal.

Figure 1 shows a complete loop system in block diagram form.

Figure 2 shows an optical T-coupler apparatus.

Figure 3 is a block diagram of two station interface units in an optical transmission loop.

Figure 4 is a diagram showing the electronic logic in the station interface unit for performing the validity check and receiving the data.

Figure 5 is a diagram of the signal select gate unit logic for switching to and from the bypass mode.

Figure 6 shows a driver unit.

Figure 7 is a block diagram of the station control logic.

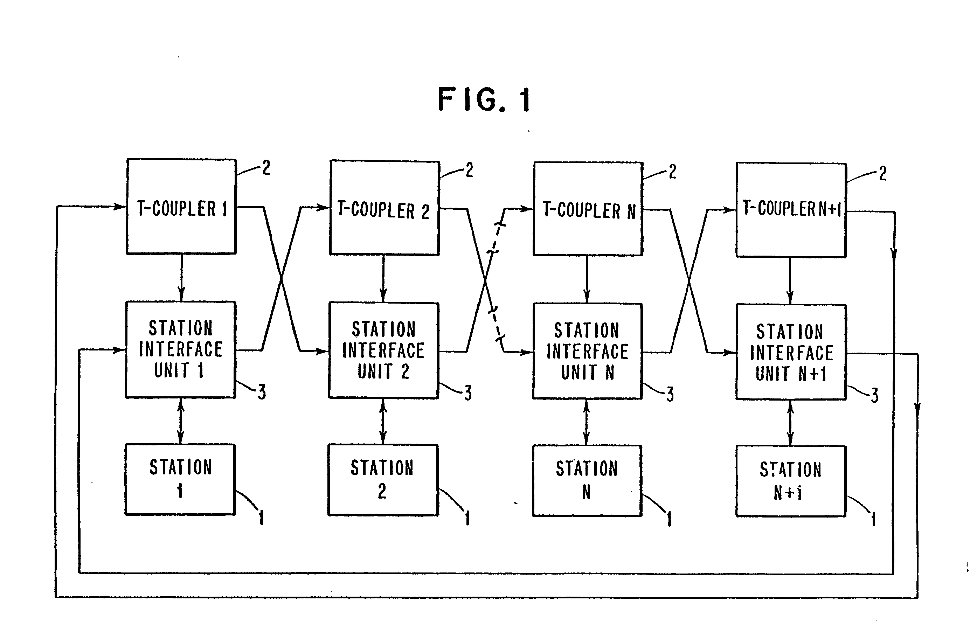

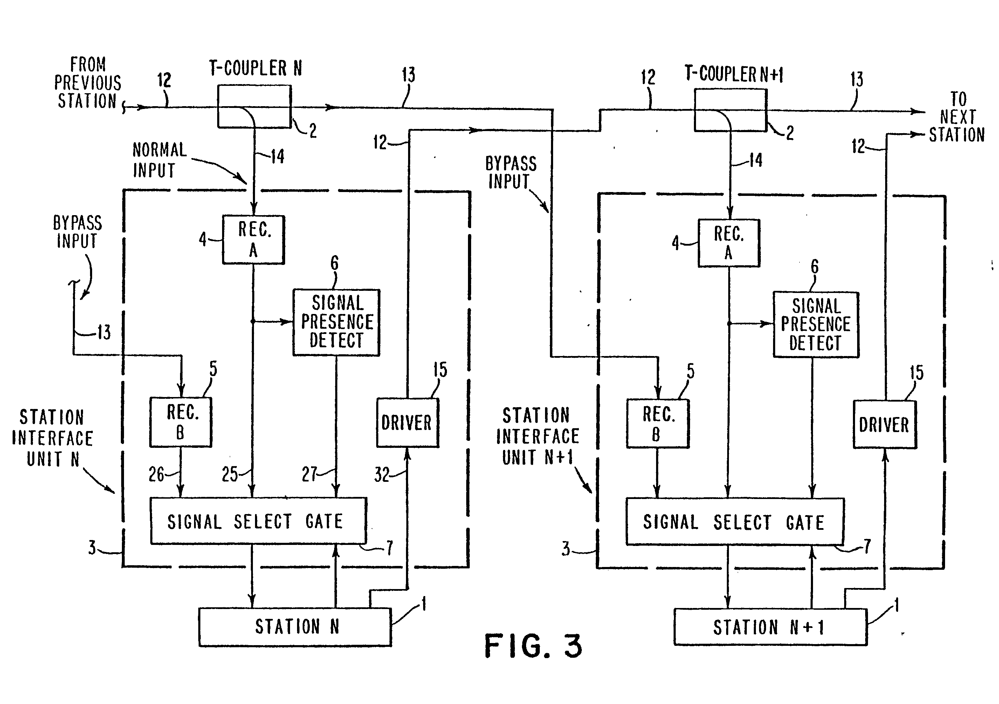

The loop transmission system described herein and shown in Figure 1 includes n + 1 stations 1, which may be data processors, controllers, terminals, etc., which are connected by fiber optic cables. Each station is attached to an optical T-coupler 2. Each station is also attached to a station interface unit 3 which, as shown in Figure 3, includes two receivers, a first receiver, or receiver A, for input from its attached T-coupler, and a second receiver, or receiver B, for input from the T-coupler at the previous station. Each T-coupler splits an incoming optic signal from a preceding station into two outgoing paths, with one path entering receiver A at the attached station, and the other path going to receiver B at the next succeeding station. By logically gating which one of two receivers at a station will be active, either a "normal" mode or a "bypass" mode can be selected, based on the validity of the signals received by a station.

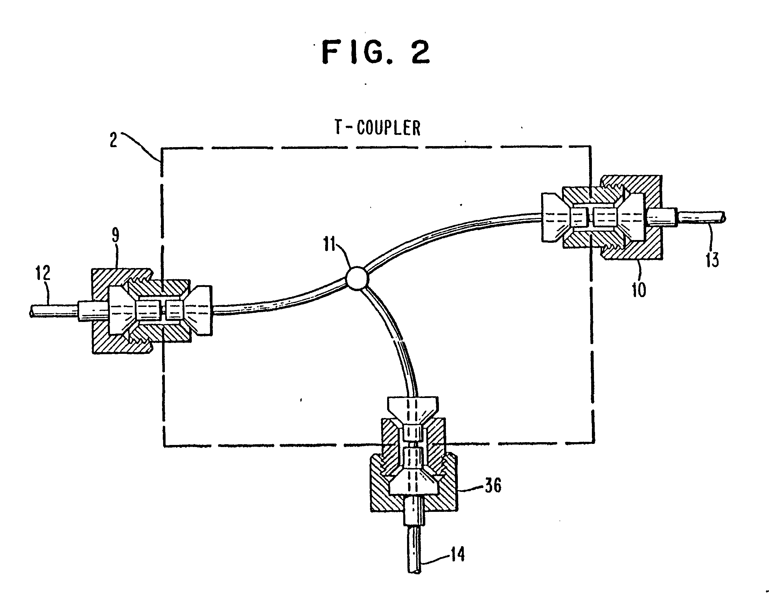

Each T-coupler 2, as shown in Figure 2, receives an optical signal on a fiber optic cable 12 into connector 9. Connector 9 directs the optical signal to a fused function point 11, where the signal is split into two paths. One path is directed to connector 10 which exits the signal onto fiber optic cable 13, and the other path is directed to connector 36 which exits the signal onto fiber optic cable 14.

Referring again to Figure 3, a station interface unit 3 receives digital optical signals from the attached T-coupler 2 on line 14 into receiver A, and also from the preceding station T-coupler on line 13 into receiver B.

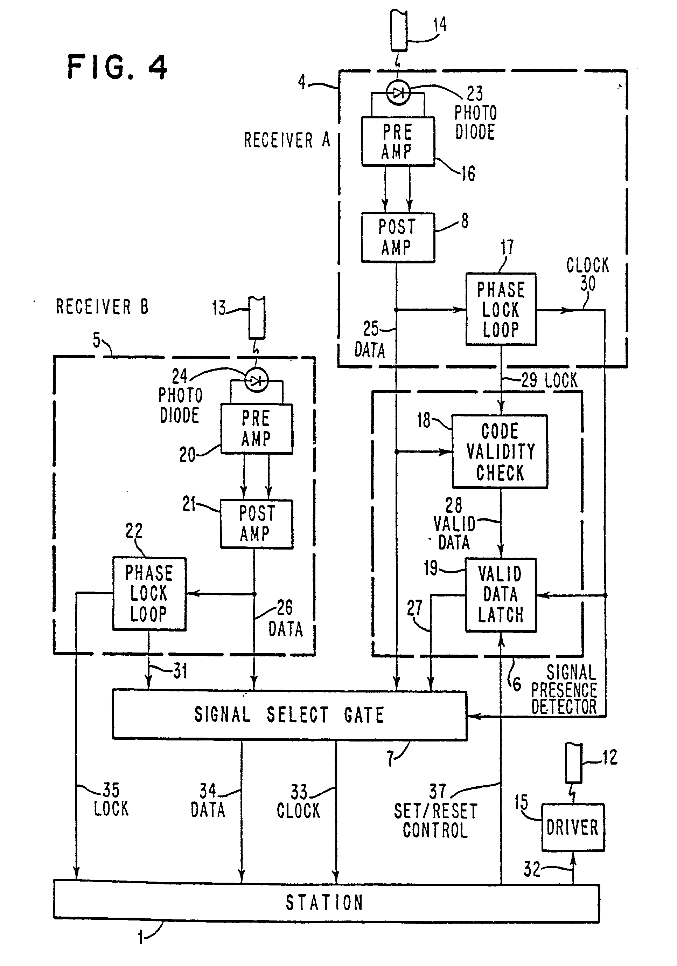

Referring now to Figure 4, the digital optical signals on fiber optic line 14 are converted to electric digital signals by photodiode 23 and entered into pre-amplifier 16 of receiver A. From pre-amplifier 16 the electric digital signals are again amplified in post-amplifier 8 before being placed on line 25. Phase lock loop unit 17, connected to line 25, generates a clock signal on line 30 from the data input, and also generates a lock signal on line 29 which indicates that the data is being acquired and tracking properly. The data being received can be encoded in any of the known transmission codes, such as bi-phase (Manchester 2) code or other more sophisticated codes which have parity bits assigned in accordance with a predetermined algorithm. Data on line 25 is also shifted into a code validity check unit 18 of the signal presence detector 6, which examines the code as well as the state of the lock signal on line 29 and produces a signal on the valid data line 28. The signal on line 28 is a positive one if the validity check shows that the data is valid, and a zero level if the validity check shows that the data is invalid. The valid data latch 19 receives the input from line 28 and latches the validity condition on/off. This validity condition is directed to the signal select gate 7 by way of line 27.

The station interface unit 3 receives digital optical signals into receiver B on fiber optic line 13 from the T-coupler at the preceding station on the loop. The optical signals are converted to electric digital signals by photodiode 24 and entered into pre-amplifier 20, into post-amplifier 21 and then into line 26 for entering to phase lock loop unit 22 and signal select gate 7 in the same manner as performed by pre-amplifier 16 and post-amplifier 8 of receiver A. Lock signals from phase lock loop unit 22 are entered through line 35 into station 1, which also receives data signals and clock signals through lines 34 and 35 from signal select gate 7. Digital output data from station 1 is sent on line 32 to driver 15 where the data undergoes a conversion from the electrical to the optical state for transmission on fiber optic line 12 to the next succeeding station T-coupler.

The signal select gate 7 receives clock inputs from receiver A on line 30 and from receiver B on line 31, and receives data input from receiver A on line 25 and from receiver B on line 26. Based on the state of line 27 from valid data latch 19, the signal select gate 7 will make a logic decision to allow data to enter the attached station 1 from either receiver A when the data on line 25 is valid or from receiver B when the data on line 25 is invalid.

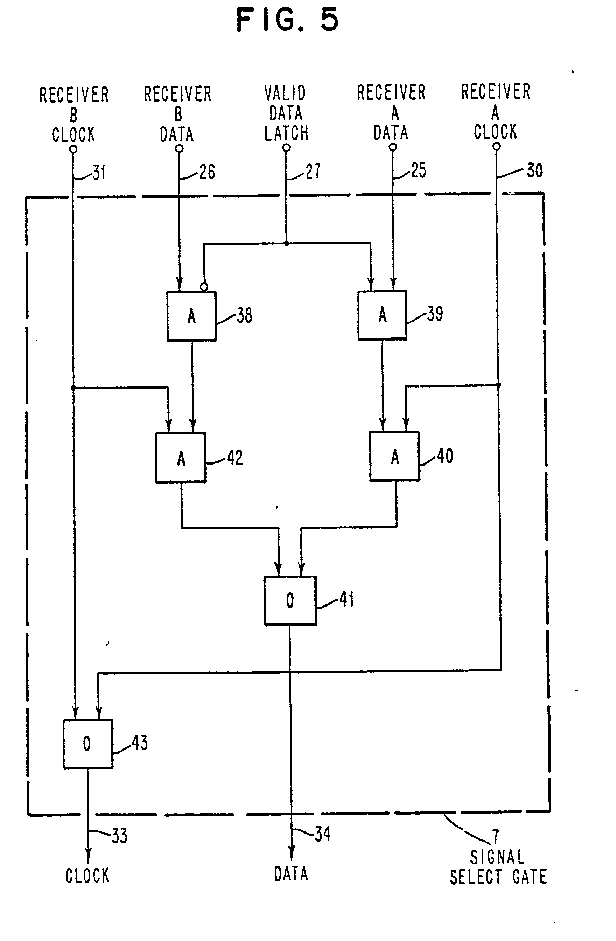

The signal select gate 7, shown in Figure 5, performs the receiver switching function. Valid data latch line 27 being positive will activate AND gate 39 to data on line 25 from receiver A, and deactivate AND gate 38 to block data from receiver B.

Line 37 from the station 1 to the valid data latch 19 gives the station the option to override normal data selection for testing purposes.

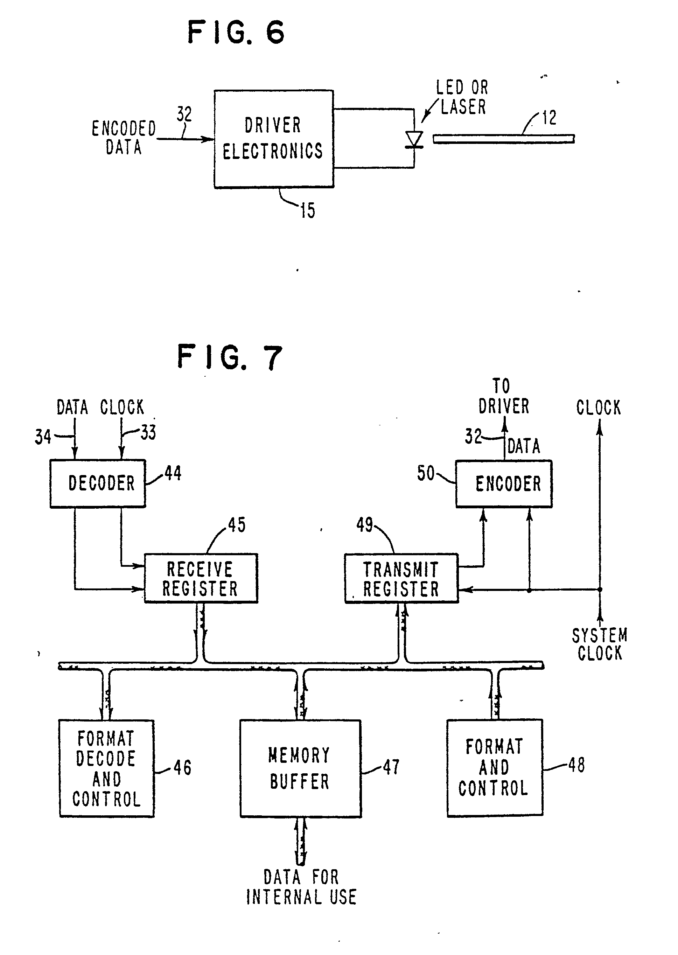

The driver unit 15, shown in Figure 6, converts the encoded digital electronic output from the station 1 into optical data by intensity modulation of a LED or laser diode 51 which interfaces with an optical fiber 12 for transmission of the data to the next station.

The station control logic, shown in Figure 7, performs the data receive and transmit function in the station 1. Data is received from the signal select gate 7 on line 34 into decoder 44 which shifts its output to receive register 45 for entry into the station internal data flow controlled by format decode and control 46, memory buffer 47 and format and control 48. Data output from the station 1 is performed by transmit register 49 and encoder 50 which place data on line 32 which is transmitted to driver 15.

Operation in the "normal" mode

Optical data arrives from the preceding station on fiber optic line 12 into optical T-coupler 2 through connector 9 to junction 11 where the optical data is split into two paths, with one path going to connector 10 onto line 13, and the other path going to connector 36 onto line 14. The optical data on line 14 is sent to receiver A in the attached station interface unit 3. At photo diode 23 the optical data is converted to electronic digital data, then amplified by pre-amplifier 16 and post-amplifier 8 onto line 25. From line 25 the digital data enters phase lock loop unit 17, code validity check unit 18, valid data latch unit 19 and signal select gate 7. In phase lock loop unit 17 a synchronization test is performed and a clock signal is generated onto line 30 and a lock signal on line 29 which indicates the data has been acquired and is tracking properly in synchronization. In code validity check unit 18 the data is checked for validity and also that the lock signal is present. If the data is valid and properly locked, a signal is sent on line 28 to valid data latch 19 turning the latch on. Latch 19 being on raises line 27 to a positive level into signal select gate 7. The digital data on line 25 also enters signal select gate 7. In signal select gate 7 the data on line 25 enters AND gate 39 along with a positive level on line 27 from the valid data latch 19. Data passes through AND gate 39 into AND gate 40 where it combines with the clock signal 30 for input into OR gate 41 and subsequent output on line 34 into the attached station 1. In signal select gate 7, line 27 from the valid data latch 19 is applied also to the negative input terminal of AND gate 38 and since the level of line 27 is positive, output from AND gate 38 is cut off, thus cutting off input from receiver B into the terminal. Therefore in the "normal" mode, data enters the terminal from the preceding station through receiver A.

Operation in the "bypass" mode

Optical data arrives from the preceding station as described in the "normal" mode operation; however, if in code validity check unit 18 the data is found invalid or the lock signal on line 29 is not present, this prevents an output on line 28 from turning valid data latch 19 on, thus line 27 is negative. Line 27 being negative cuts off the flow of data into station 1 through AND gate 39. Line 27 being negative allows data on line 26 from receiver B to enter the terminal through AND gate 38, AND gate 42, OR gate 41 and line 34. Data enters receiver B from the station prior on the loop to the preceding station through line 13, photo diode 24 where the data is converted from optical to electrical, through pre-amplifier 20, post-amplifier 21, onto line 26 into AND gate 38. Therefore in the " bypass" mode, data enters the terminal from the station prior to the preceding station through receiver B.

Whereas the present invention has been described with reference to stations connected in a loop configuration, it is evident that it may be used also with a plurality of stations connected in series configuration.

**Claims**

1. A fiber optic data transmission system having at least three stations connected in a loop or series configuration characterized in that each station (1) has an optical T-coupler (2), and a station interface unit (3) including a first receiver (4) and a second receiver (5); the optical T-coupler (2) providing a separation of a digital optical input signal transmitted from the preceding station into two output paths (13 and 14), one of which (14) is directed to the first receiver (4) within the attached station interface unit (3) and the other of which (13) is directed to the second receiver (5) in the next succeeding station interface unit (3); the first receiver (4) for accepting a digital optical signal from the optical T-coupler (2) attached to its station interface unit (3) and converting the optical signal into an electronic digital signal; the second receiver (5) for accepting a digital optical signal from the optical T-coupler (2) at the preceding station interface unit (3) and converting the optical signal into a digital electronic signal; signal selection means (7) at each station interface unit (3) being provided for effecting normal mode or bypass mode operation dependent upon the validity of the digital electronic signal at the output of its first receiver (4); whereby a station (1) operates in a normal mode by accepting signals only from its first receiver (4) or in a bypass mode by accepting signals only from its second receiver (5).

2. A transmission system according to Claim 1 wherein the station interface unit (3) further includes a phase lock loop unit (17) which performs a synchronization test on data accepted by the first receiver (4) to determine if said data is tracking in synchronization; a code validity check unit (18) which performs a parity test on data accepted by the first receiver (4) to determine if the data is valid; a valid data latch (19) which is set by both the phase lock loop unit (17) indicating that the received data is in synchronization and the code validity check unit (18) indicating that the received data is valid; whereby the valid data latch (19) not being set indicates that the received data is either not in synchronization or is not valid.

3. A transmission system according to Claim 2 wherein the station interface unit (3) further includes a signal select gate (7) which receives data signals from the first receiver (4), data signals from the second receiver (5), and a signal from the valid data latch (19); the signal select gate (7) having switching logic for selecting data signals from the first receiver (4) or from the second receiver (5) to send data signals to a memory buffer (47) in said station (1); the switching logic selecting data signals from the first receiver (4) if the signal from the valid data latch (19) is positive, and selecting data signals from the second receiver (5) if the signal from the valid data latch (19) is negative; whereby selection of data signals from the first receiver (4) places the station in the normal mode and selection of data signals, and selection from the second receiver (5) places the station in the bypass mode.

4. A transmission system according to Claim 1 wherein the station interface unit (3) further includes a driver (15) which includes electronics for modulating and amplifying electronic data signals from the station (1), and a light emitting device (51) operating a fiber optic cable (12), whereby electronic data signals at a station (1) are converted to optical data signals for transmission on a fiber optic cable (12) to the next succeeding station.

**Patentansprüche**

1. Lichtwellenleiter-Datenübertragungssystem mit mindestens drei Stationen, die in einer Schleifen- oder Reihenkonfiguration verbunden sind, dadurch gekennzeichnet, daß jede Station (1) eine optische T-Kupplung (2) und eine Station-Schnittstelleneinheit (3) mit einem ersten Empfänger (4) und einem zweiten Empfänger (5) umfaßt; wobei die optische T-Kupplung (2) eine Teilung eines digitalen optischen Eingangssignal, das von der vorhergehenden Station übertragen wird, auf zwei Ausgangspfade bereitstellt, von denen einer zum ersten Empfänger (4) innerhalb der angebundenen Stations-Schnittstelleneinheit (3) führt und von denen der andere zum zweiten Empfänger (5) in der nächstfolgenden Stationsschnittstelleneinheit (1) führt; wobei der erste Empfänger (4) von der optischen T-Kupplung (2), die an ihre Stations-Schnittstelleneinheit (3) angebunden ist, ein digitales optisches Signal empfängt und das optische Signal in ein elektronisches Digitalsignal überführt; wobei der zweite Empfänger (5) von der optischen T-Kupplung (2) an der vorhergehenden Stations-Schnittstelleneinheit (3) ein digitales optisches Signal empfängt und das optische Signal in ein elektronisches Digitalsignal überführt; mit Signalansteuerungsmitteln (7) bei jeder Stations-Schnittstelleneinheit (3), um abhängig von der Gültigkeit des elektronischen Digitalsignals am Ausgang ihres ersten Empfängers (4) eine Normalbetriebsweise oder Umgehungsbetriebsweise zu erreichen; wobei eine Station (1) in Normalbetriebsweise arbeitet, indem sie nur Signale ihres ersten Empfängers (4) annimmt oder in Umgehungsbetriebsweise, indem sie nur Signale ihres zweiten Emnpfängers (5) annimmt.

2. Übertragungssystem nach Annspruch 1, worin die Stations-Schnittstelleneinheit (3) weiterhin eine Phasen-Schleifensperreinrichtung (17) beinhaltet, die einen Synchronisationstest zu Daten durchführt, die von dem ersten Empfänger (4) angenommen wurden, um zu bestimmen, ob besagte Daten in Synchronisation gespurt sind; eine Codegültigkeits-Prüfeinrichtung (18) die eine Paritätsprüfung an Daten durchführt, die vom ersten Empfänger (4) angenommen wurden, um zu bestimmen, ob die Daten gültig sind; ein selbsthaltender Datengültigkeitsschalter (19), der von beiden, der Phasen-Schleifensperreinrichtung (17), die anzeigt, daß die empfangenen Daten synchronisiert sind, und der Codegültigkeits-Prüfeinrichtung (18), die anzeigt, daß die empfangenen Daten gültig sind, gesetzt ist; wobei das Nichtgesetztsein des Datengültigkeitsschalters (19) anzeigt, daß die empfangenen Daten entweder nicht synchronisiert oder nicht gültig sind.

3. Übertragungssystem nach Ansruch 2, worin die Stations-Schnittstelleneinheit (3) weiterhin ein Signalauswahltor (7) beinhaltet, das Datensignale vom ersten Empfänger (4), Datensignale vom zweiten Empfänger (5) und ein Signal vom selbsthaltenden Datengültigkeitsschalter (19) empfängt; wobei das Signalauswahltor (7) eine Schaltlogik aufweist, um Datensignale vom ersten Empfänger (4) oder vom zweiten Empfänger (5) auszuwählen, um Datensignale zu einem Zwischenspeicher (47) in besagter Station (1) zu senden; wobei die Schaltlogik Datensignale als erster Empfänger (4) auswählt, wenn das Signal vom Datengültigkeitsschalter (19) positiv ist und Datensignale vom zweiten Empfänger (5) auswählt, wenn das Signal vom Datengültigkeitsschalter (19) negativ ist; wobei die Auswahl der Datensignale vom ersten Empfänger (4) die Station in die Normalbetriebsweise versetzt und die Auswahl von Datensignalen vom zweiten Empfänger (5) die Station in die Umgehungsbetriebsweise versetzt.

4. Übertragungssystem nach Anspruch 1, worin die Stations-Schnittstelleneinheit (3) weiterhin einen Treiber (15) beinhaltet, der elektronische Bauteile zur Modulation und Verstärkung elektrischer Datensignale von der Station (1) umfaßt und ein Licht ausstrahlendes Gerät (51), daß ein Lichtfaserkabel (12) betreibt, wobei elektronische Datensignale von einer Station (1) zur Übertragung auf einem Lichtfaserkabel zur nächstfolgenden Station in optische Datensignale umgewandelt werden.

**Revendications**

1. Système de transmission de données par fibre optique comprenant au moins trois stations connectées en configuration de boucle ou de série, caractérisé en ce que chaque station (1) comporte un coupleur optique en T (2), et un module d'interface de station (3) comprenant un premier récepteur (4) et un second récepteur (5); le coupleur optique en T (2) assurant la séparation d'un signal d'entrée optique numérique envoyé à partir de la station précédente selon deux chemins de sortie (13 et 14), dont le premier (14) est envoyé au premier récepteur (4) à l'intérieur du module d'interface de station associé (3) et dont l'autre (13) est envoyé au second récepteur (5) dans le module d'interface de station immédiatement suivant (3); le premier récepteur (4) servant à recevoir un signal optique numérique provenant du coupleur optique en T (2) associé à son module d'interface de station (3) et à convertir le signal optique en un signal électronique numérique; le second récepteur (5) servant à recevoir un signal optique numérique provenant du coupleur optique en T (2) du module d'interface de station précédent (3) et à convertir le signal optique en un signal électronique numérique; un moyen de sélection de signal (7) à chaque module d'interface de station (3) étant prévu pour effectuer des opérations en mode normal ou en mode de dérivation selon la validité du signal électronique numérique à la sortie de son premier récepteur (4); d'où il résulte qu'une station (1) fonctionne dans un mode normal en acceptant des signaux provenant seulement de son premier récepteur (4) ou dans un mode de dérivation en acceptant seulement des signaux de son second récepteur (5).

2. Système de transmission selon la revendication 1, dans lequel le module de station d'interface (3) comprend de plus un module à boucle vérouillée en phase qui réalise un test de synchronisation sur les données reçues par le premier récepteur (4) pour déterminer si lesdites données suivent la synchronisation; un module de vérification de validité de code (18) qui réalise un test de parité sur les données reçues par le premier récepteur (4) pour déterminer si les données sont valides; une bascule de données valides (19) qui est déclenchée quand, à la fois, le module à boucle vérouillée en phase (17) indique que les données reçues sont en synchronisation et le module de vérification de validité de code (18) indique que les données reçues sont valides; d'où il résulte que la bascule de données valides (19) non déclenchée indique que les données reçues soit ne sont pas synchronisées soit ne sont pas valides.

3. Système de transmission selon la revendication 2, dans lequel le module d'interface de station (3) comprend de plus une porte de sélection de signal (7) qui reçoit des signaux de données provenant du premier récepteur (4), des signaux de données provenant du second récepteur (5), et un signal provenant de la bascule de données valides (19); la porte de sélection de signal (7) possédant une logique commutable pour choisir des signaux de données provenant du premier récepteur (4) ou du second récepteur (5) et pour envoyer ces signaux de données à une mémoire tampon (47) dans ladite station (1); la logique de commutation choisissant des signaux de données provenant du premier récepteur (4) si le signal provenant des bascule de données valides (19) est positif et choisissant des signaux de données provenant du second récepteur (5) si le signal provenant des bascules de données valides (19) est négatif; d'où il résulte que le choix des signaux de données provenant du premier récepteur (4) met la station dans le mode normal et le choix de signaux de données provenant du second récepteur (5) met la station dans le mode de dérivation.

4. Système de transmission selon la revendication 1, dans lequel le module d'interface de station (3) comprend de plus une unité de commande (15) qui comprend un dispositif électronique pour moduler et amplifier des signaux de données électroniques provenant de la station (1) et un dispositif émetteur de lumière (51) utilisant un câble à fibre optique (12), d'où il résulte que les signaux de données électroniques à une station (1) sont convertis en signaux de données optiques pour être transmis par un câble à de fibre optique (12) vers une station immédiatement suivante.

# FIG. 1

EP 0 107 017 B1

# FIG. 2

T-COUPLER

2

FIG. 3

FROM PREVIOUS STATION

TO NEXT STATION

T-COUPLER N

T-COUPLER N+1

NORMAL INPUT

BYPASS INPUT

BYPASS INPUT

REC. A (4)

REC. B (5)

SIGNAL PRESENCE DETECT (6)

SIGNAL SELECT GATE (7)

DRIVER (15)

STATION N

STATION INTERFACE UNIT N (3)

REC. A (4)

REC. B (5)

SIGNAL PRESENCE DETECT (6)

SIGNAL SELECT GATE (7)

DRIVER (15)

STATION N+1

STATION INTERFACE UNIT N+1 (3)

12 13 14 25 26 27 32 1 2

# FIG. 4

# FIG. 5

RECEIVER B CLOCK 31
RECEIVER B DATA 26
VALID DATA LATCH 27
RECEIVER A DATA 25
RECEIVER A CLOCK 30

A 38
A 39
A 42
A 40
0 41
0 43

33 CLOCK
34 DATA
7 SIGNAL SELECT GATE

# EP 0 107 017 B1

## FIG. 6

ENCODED DATA — 32 → DRIVER ELECTRONICS — 15

LED OR LASER

12

## FIG. 7

DATA CLOCK — 34, 33 → DECODER 44

TO DRIVER — 32 DATA → ENCODER 50

CLOCK

RECEIVE REGISTER 45

TRANSMIT REGISTER 49

SYSTEM CLOCK

FORMAT DECODE AND CONTROL 46

MEMORY BUFFER 47

FORMAT AND CONTROL 48

DATA FOR INTERNAL USE

6